# EUROPEAN PATENT SPECIFICATION

(11) **EP 2 201 666 B1**
(45) Date of publication and mention of the grant of the patent: **20.03.2013**
(21) Application number: 07838525.9
(22) Date of filing: 19.09.2007
(51) Int. Cl.: F01D 15/10, F01D 21/00, F01K 13/02, H02P 9/10, F01D 21/02, H02P 3/22

(54) **POWER GENERATION SYSTEM AND METHOD FOR PREVENTING OVERSPEEDING OF A TURBINE DRIVEN GENERATOR**
ENERGIEWANDLUNGSSYSTEM UND VERFAHREN ZUR VERHINDERUNG DER ÜBERDREHZAHL EINES TURBINENGETRIEBENEN GENERATORS
SYSTÈME DE PRODUCTION D'ÉNERGIE ET PROCÉDÉ DE PRÉVENTION D'EMBALLEMENT D'UNE GÉNÉRATRICE ENTRAÎNÉE PAR UNE TURBINE

(43) Date of publication of application: 30.06.2010
(73) Proprietor: UTC Power Corporation, South Windsor, CT 06074 (US)
(72) Inventor: FREDETTE, Steven, J., Waukesha WI 53188 (US); ARNER, Michael, D., Manchester, CT 06040 (US)
(74) Representative: Leckey, David Herbert
(86) International application number: PCT/US2007/020322
(87) International publication number: WO 2009/038562

(56) References cited:
- EP-A1- 0 098 047
- DE-A1- 19 839 636
- DE-A1-102004 016 450
- US-A- 4 211 932

## Description

### Technical Field

This disclosure relates to a power generation system and to a method for preventing generator overspeeding when loss of grid power or load occurs.

### Background of the Disclosure

Rankine Cycle Systems are commonly used for generating electrical power, with the system including an evaporator for evaporation of a motive fluid, a turbine for receiving the vapor from the evaporator to drive a generator, a condenser for condensing the vapor, and a pump or other means for recycling the condensed fluid to the evaporator. The generator is generally connected to a utility so that its generated power is delivered to a grid or the like.

Because of faults that may occur in the grid or generator, it is common practice to provide a grid disconnecting means such that the power being delivered by the generator can be disconnected from the grid. In such occasion, the sudden removal of the load, at a time when the turbine and generator are operating, will cause the generator to overspeed and thereby cause attendant problems. Such an overspeeding condition tends to stress the rolling element bearings at a time when the oil pump is off, thereby potentially shortening the life of the turbine. Since the rotating components must be designed to handle overspeed conditions, the turbine impeller material is limited to a light weight material. While the Rankine Cycle System may include provisions such as a flow control valve and a dump valve to reduce turbine inlet pressure and thereby reduce generator speed, in order to be effective they need to be fast acting. This adds cost to both the apparatus and to the method of operation.

There is therefore a need to economically and effectively prevent overspeeding, of a generator during loss of grid or load conditions.

EP 0 098 047 A1 discloses an electrical control system for use with a hydroelectric or steam turbine system, DE 102004016450 A1 discloses a system for increasing the braking power applied to a generator of a steam turbine, and US 4,211,932 discloses a power recovery system comprising an eddy current brake.

### Disclosure

According to the present invention there is provided a power generation system as claimed in claim 1 and a method of preventing overspeed of a grid connected generator as claimed in claim 4. Provision is made so that when loss of load occurs, such as when a grid break disconnects the generator from the grid, a load bank is selectively connected to the generator to provide a sink for the energy being delivered by the generator and thereby prevent it from overspeeding. Such an arrangement replaces the lost load and allows the generator and its driving turbine to be gradually slowed down without damage to the system.

In the drawings as hereinafter described, a preferred embodiment is depicted.

### Brief Description of the Drawings

FIG. 1 is a schematic illustration of an Organic Rankine System and its driven generator in accordance with the prior art.
FIG.2 is a schematic illustration of the generator/grid interconnection with a load bank connected thereto in accordance with the present disclosure.

### Detailed Description of the Disclosure

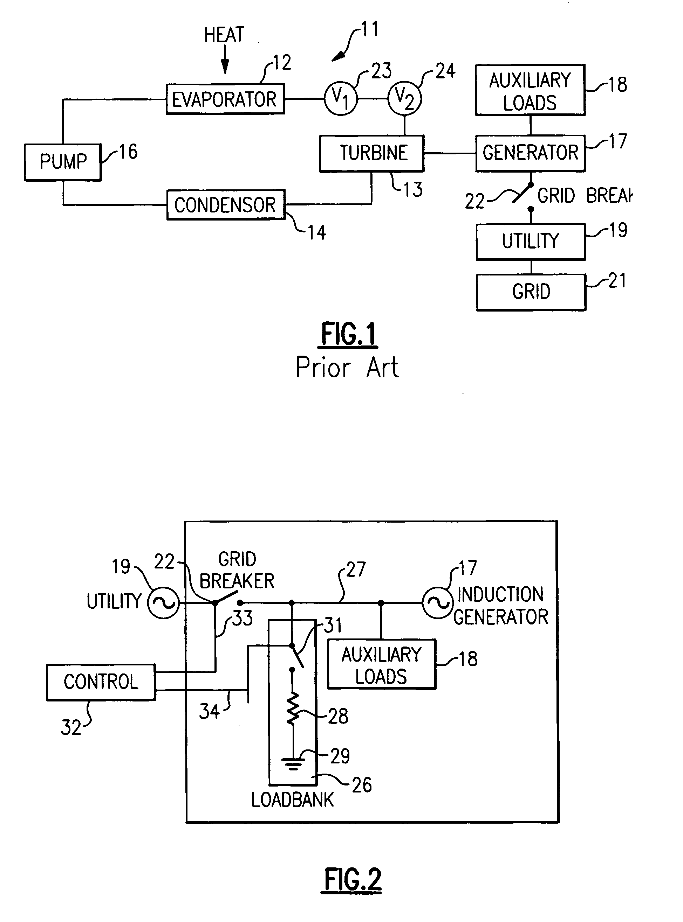

Shown at 11 in Fig. 1 is a Rankine Cycle System which includes, in serial flow relationship, a boiler or evaporator 12, a turbine 13, a condenser 14 and a pump 16. In operation, heat, which may be waste heat from natural or commercial sources, is applied to the evaporator 12, with the resulting vapor being provided to the turbine 13 to provide motive power thereto. The lower energy vapor then passes to the condenser 14 where it is converted to a liquid which is then circulated by the pump 16 back to the evaporator 12.

The working fluid that is circulated within the system may be water with the turbine then being driven by steam. However, it may also be an organic fluid such as R-245fa, in which case the system is known as an Organic Rankine Cycle (ORC) system.

As is common, the turbine 13 is mechanically connected to a generator 17 for generating electrical power which is provided to auxiliary loads 18 and to a utility 19 which it is then connected to a grid 21 to be used by various users of energy.

Recognizing that faults may occur in the grid 21 a circuit breaker or grid break 22 is provided between the generator 17 and the utility 19 to selectively disrupt the flow of energy therebetween.

If the grid break 22 is opened during a period in which the generator 17 and its driving turbine 13 are operating in a high capacity mode, then the sudden removal of the load will cause the generator 17 to accelerate to an overspeed condition. This overspeed condition can cause damage to the turbine 13 such as by stressing the bearings, thereby shortening their life. This is particularly true when the oil pump is off. Because of critical speed relationships between the turbine 13 and the generator, it is also necessary to use a relatively light weight material for the impeller of the turbine 13 so as to accommodate these overspeed conditions.

One action that can be taken to reduce the overspeed condition upon the opening of the grid break 22 is to close a flow control valve 23 to reduce or shut down the flow of vapor to the turbine 13. However, in order for this to be effective, the flow control valve 23 must be fast acting, and this requires, for example, a pneumatic actuator which, in turn, requires a muscle actuation system. These features add complexity and cost to the system.

In order to provide a fail safe mechanism to remove turbine inlet pressure in the event that the flow control valve 23 fails to actuate or to properly operate to prevent the overspeed event, a dump valve 24 with its associated piping can be provided downstream from the evaporator 12 as shown. However, again, this adds cost and complexity to the system.

An alternative to the above described approach is shown in Fig. 2 wherein a load bank 26 is connected in parallel with the line 27 interconnecting the generator 17 (here shown as an induction generator) to the utility 19. The generator may also be synchronous. The load bank 26 comprises a dissipative or resistive load 28 connected to ground 29 through a switch 31 to act as a sink for the electrical energy being generated. The resistive load 28 may be sized for load duty (i.e. impulsive energy) to keep the size and cost down. The resistive load 28 may be arranged in alternative ways, such as, for example, a delta connection. Further, it may be not connected to ground 26. Other dissipative loads may be used as an alternative to resistors.
A control 32 is interconnected by line 33 to the grid breaker 22 and line 34 to the switch 31. The control 31 operates the switch 31 in response to the grid breaker 22. That is, when the control 32 senses that the grid breaker 22 has opened, it responsively causes the switch 31 to close and thereby allow the energy being generated by the generator 17 at that time to be dissipated into the resistive load 28. Other means for detecting loss of grid 19, not forming part of the invention, may be used including overspeed sensing, protective relay actuation and/or over voltage. In this way, the turbine spin down can be controlled, and the generator 17 will not be caused to overspeed. As a result, the turbine bearing life and reliability is substantially increased, and system cost is reduced. Further, the need for the muscle system such as, for example, nitrogen, to obtain fast acting flow control valve is eliminated, and electric valve actuators or no valve actuators will suffice, thereby reducing cost and improving reliability. Finally, the use of a dump valve and its associated plumbing is eliminated.
While the present invention has been particularly shown and described with reference to the preferred mode as illustrated in the drawings, it will be understood by one skilled in the art that various changes in detail may be effected therein without departing from the scope of the invention as defined by the appended claims.

## Claims

1. A power generation system, comprising:
a Rankine Cycle System (11) Including an evaporator (12), a turbine (13), a condenser (14) and a pump (16);
a generator (17) connected to said turbine (13) so as to be driven thereby;
an electrical grid (21) being electrically connected to said generator (17) for the delivery of generated power thereto,
a line breaker (22) for selectively opening said electrical connection to said grid (21); and
a load bank (26) selectively connected to said generator (17) when said line breaker (22) is activated to allow generated energy to flow to said load bank (26),
wherein said load bank (26) includes a switch (31) that is selectively closed to connect a dissipative load (28) to the generator (17); **characterized in that**
a control (32) is interconnected to the line breaker (22) and the switch (31) for responsively closing said switch (31) in response to the activation of said line breaker (22).

2. A power generation system as set forth in claim 1 wherein said load bank (26) includes a dissipative load (28) sufficient to substantially sink the electrical energy being generated by the generator (17) at the time the line breaker (22) is activated.

3. A power generation system as set forth in claim 1 or 2 wherein said load bank (26) is connected In parallel with the line (27) interconnecting said generator (17) and said grid (21).

4. A method of preventing overspeed of a grid (21) connected generator (17) being driven by a turbine (13) of a Rankine Cycle System (11) wherein the generator (17) is suddenly disconnected from the grid (21) because of the occurrence of a fault, comprising the steps of:
providing a load bank (26) with a dissipative load (28) sufficient to sink the energy being generated by the generator (17) at the time of the disconnection; and
sensing when a disconnection occurs and responsively electrically connecting said load bank (26) to said generator (17) for receiving the generated energy thereof; and
wherein said load bank (26) includes a switch (31) that is selectively closed to connect the dissipative load (28) to the generator (17), **characterized in that**
said switch (31) is responsively closed in response to the activation of a line breaker (22) by a control (32) that is interconnected to the line breaker (22) and the switch (31).

5. A method as set forth in claim 4 wherein said load bank (26) includes a dissipative load (28) sufficient to substantially sink the electrical energy being generated by the generator (17) at the time the line breaker (22) is activated.

6. A method as set forth in claim 4 or 5 wherein said load bank (26) is connected in parallel with the line (27) interconnecting said generator (17) and said grid (21).

## Patentansprüche

1. Leistungserzeugungssystem, umfassend:
ein Rankine-Kreislauf-System (11) beinhaltend einen Verdampfer (12), eine Turbine (13), einen Kondensator (14) und eine Pumpe (16);
einen Generator (17), der mit der Turbine (13) derart verbunden ist, dass er von dieser angetrieben wird;
ein elektrisches Netz (21), das elektrisch mit dem Generator (17) für die Lieferung von erzeugter Energie zu diesem verbunden ist, eine Leitungsunterbrechung (22) zum selektiven Öffnen der elektrischen Verbindung mit dem Netz (21); und
eine Lastengruppe (26), die selektiv mit dem Generator (17) verbunden ist, wenn die Leitungsunterbrechung (22) dazu aktiviert ist, es erzeugter Energie zu erlauben, zu der Lastengruppe (26) zu strömen,
wobei die Lastengruppe (26) einen Schalter (31) beinhaltet, der selektiv geschlossen ist, um eine dissipative Last (28) mit dem Generator (17) zu verbinden, **dadurch gekennzeichnet, dass**
eine Steuerung/ Regelung (32) mit der Leitungsunterbrechung (22) und dem Schalter (31) verbunden ist zum ansprechungsmäßigen Schließen des Schalters (31) in Erwiderung auf die Aktivierung der Leitungsunterbrechung (22).

2. Leistungserzeugungssystem nach Anspruch 1, wobei die Lastengruppe (26) eine dissipative Last (28) beinhaltet, die ausreichend ist, um die durch den Generator (17) erzeugte elektrische Energie wesentlich zu senken zu der Zeit, zu der die Leitungsunterbrechung (22) aktiviert ist.

3. Leistungserzeugungssystem nach Anspruch 1 oder 2, wobei die Lastengruppe (26) parallel mit der Leitung (27), die den Generator (17) und das Netz (21) verbindet, verbunden ist.

4. Verfahren zum Verhindern von Überdrehzahl eines mit einem Netz (21) verbundenen Generators (17), der von einer Turbine (13) eines Rankine-Kreislauf-Systems (11) angetrieben wird, wobei der Generator plötzlich, auf Grund des Auftreten eines Fehlers, von dem Netz (21) getrennt wird, umfassend die Schritte:
Bereitstellen einer Lastengruppe (26) mit einer dissipativen Last (28), die ausreichend ist, die von dem Generator (17) erzeugte Energie zum Zeitpunkt der Trennung zu senken; und
Erkennen, wann eine Trennung auftritt, und ansprechungsmäßig die Lastengruppe (26) elektrisch mit dem Generator (17) verbinden zum Aufnehmen der von diesem erzeugten Energie; und
wobei die Lastengruppe (26) einen Schalter (31) beinhaltet, der selektiv geschlossen wird, um die dissipative Last (28) mit dem Generator (17) zu verbinden, **dadurch gekennzeichnet, dass** der Schalter (31) ansprechungsmäßig geschlossen wird in Erwiderung auf die Aktivierung einer Leitungsunterbrechung (22) durch eine Steuerung/ Regelung (32), die mit der Leitungsunterbrechung (22) und dem Schalter (31) verbunden ist.

5. Verfahren nach Andspruch 4, wobei die Lastengruppe (26) eine dissipative Last (26) beinhaltet, die ausreichend ist, um die von dem Generator (17) erzeugte elektrische Energie zu der Zeit, zu der die Leitungsunterbrechung aktiviert ist, wesentlich zu senken.

6. Verfahren nach Anspruch 4 oder 5, wobei die Lastengruppe (26) parallel mit der Leitung (27), die den Generator (17) und das Netz (21) verbindet, verbunden ist.

## Revendications

1. Système de production d'énergie électrique, comprenant :
un système à cycle de Rankine (11) constitué d'un évaporateur (12), d'une turbine (13), d'un condenseur (14) et d'une pompe (16) ;
une génératrice (17) connectée à ladite turbine (13) pour être entraînée par celle-ci ;
un réseau électrique (21) connecté électriquement à ladite génératrice (17) de manière à ce que l'énergie électrique produite soit alimentée à celui-ci ;
un rupteur de ligne (22) pour ouvrir sélectivement ladite connexion électrique audit réseau (21) ; et
un banc de charge (26) connecté sélectivement à ladite génératrice (17) quand ledit rupteur de ligne (22) est activé pour permettre à l'énergie électrique produite de circuler à travers ledit banc de charge (26),
ledit banc de charge (26) comprenant un commutateur (31) qui est fermé sélectivement pour connecter une charge dissipative (28) à la génératrice (17) ;
**caractérisé en ce qu'**une commande (32) est interconnectée avec le rupteur de ligne (22) et le commutateur (31) pour fermer de manière réactive ledit commutateur (31) en réponse à l'activation dudit rupteur de ligne (22).

2. Système de production d'énergie électrique selon la revendication 1, dont ledit banc de charge (26) comprend une charge dissipative (28) suffisante pour délester sensiblement l'énergie électrique produite par la génératrice (17) au moment où le rupteur de ligne (22) est activé.

3. Système de production d'énergie électrique selon les revendications 1 ou 2, dont ledit banc de charge (26) est connecté en parallèle avec la ligne (27) interconnectant ladite génératrice (17) et ledit réseau (21).

4. Procédé de prévention d'emballement d'une génératrice (17) connectée à un réseau (21) qui est entraînée par une turbine (13) d'un système à cycle de Rankine (11), dont la génératrice (17) est soudainement déconnectée du réseau (21) en raison de l'apparition d'une défaillance, comprenant les étapes qui consistent à :
monter un banc de charge (26) ayant une charge dissipative (28) suffisante pour délester l'énergie électrique produite par la génératrice (17) au moment de la déconnexion ; et
détecter une déconnexion quand elle se produit et en réponse connecter électriquement ledit banc de charge (26) à ladite génératrice (17) pour recevoir l'énergie produite par celle-ci ; et
dont ledit banc de charge (26) comprend un commutateur (31) qui est fermé sélectivement pour connecter la charge dissipative (28) à la génératrice (17),
**caractérisé en ce que** ledit commutateur (31) est fermé de manière réactive en réponse à l'activation d'un rupteur de ligne (22) par une commande (32) qui est interconnectée avec le rupteur de ligne (22) et le commutateur (31).

5. Procédé selon la revendication 4, dont ledit banc de charge (26) comprend une charge dissipative (28) suffisante pour délester sensiblement l'énergie électrique produite par la génératrice (17) au moment où le rupteur de ligne (22) est activé.

6. Procédé selon les revendications 4 ou 5, dont ledit banc de charge (26) est connecté en parallèle avec la ligne (27) interconnectant ladite génératrice (17) et ledit réseau (21).
